(19) Europäisches Patentamt
European Patent Office
Office européen des brevets

(11) EP 4 641 292 A1

(12) **EUROPEAN PATENT APPLICATION**
published in accordance with Art. 153(4) EPC

(43) Date of publication:
29.10.2025 Bulletin 2025/44

(21) Application number: 23907071.7

(22) Date of filing: 20.12.2023

(51) International Patent Classification (IPC):
G02F 1/1339 (2006.01)     G02F 1/13 (2006.01)
G02F 1/19 (2019.01)

(52) Cooperative Patent Classification (CPC):
G02F 1/13; G02F 1/1339; G02F 1/19

(86) International application number:
PCT/JP2023/045619

(87) International publication number:
WO 2024/135711 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.12.2022 JP 2022203287

(71) Applicant: Sekisui Chemical Co., Ltd.
Osaka-shi, Osaka 530-8565 (JP)

(72) Inventors:
• UEDA, Saori
Mishima-gun, Osaka 618-0021 (JP)
• WAKIYA, Takeshi
Kyoto-shi, Kyoto 601-8105 (JP)
• OOKURA, Kouki
Kouka-shi, Shiga 528-8585 (JP)
• YAMADA, Yasuyuki
Mishima-gun, Osaka 618-0021 (JP)

(74) Representative: Ter Meer Steinmeister & Partner
Patentanwälte mbB
Nymphenburger Straße 4
80335 München (DE)

(54) **SILICONE PARTICLES AND LIGHT-DIMMING LAMINATE**

(57) Provided is a silicone particle capable of controlling a gap between base materials with high accuracy even in a high-temperature environment, suppressing a variation in transmittance of a resulting dimmer laminate, and suppressing scratching of the base material. The silicone particle according to the present invention includes a silicone particle body and a plurality of fillers, at least one of the plurality of fillers is present inside the silicone particle body, and a ratio of a 10% K value at 90°C to the 10% K value at 25°C is 0.90 or more.

[FIG. 1.]

**Description**

**TECHNICAL FIELD**

The present invention relates to a silicone particle and a dimmer laminate using the silicone particles.

**BACKGROUND ART**

Dimming materials such as dimming glass and dimming films are materials that has a property that light transmittance changes depending on whether an electric field is applied or not, and can adjust an amount of incident light. The types of dimming materials are roughly classified into a Suspended Particle Device (SPD) type, a Polymer Dispersed Liquid Crystal (PDLC) type, and a Guest-Host Liquid Crystal (GHLC) type depending on an action mechanism that changes the light transmittance.

The SPD type is a type where a light-modulating suspension is dispersed in a resin matrix. The light-modulating suspension includes light-modulating particles. The light-modulating particles can respond to an electric field. In the SPD type, the light-modulating particles dispersed in the light-modulating suspension absorb, scatter or reflect light by Brownian motion in the state where no electric field is applied; thus, incident light is not transmitted through the dimming material. When the electric field is applied, the light-modulating particles are polarized to be aligned in a direction parallel to the electric field, so that incident light is transmitted through the dimming material. Thus, in the SPD type, the light transmittance can be adjusted by utilizing polarization orientation of the light-modulating particles.

The PDLC type is a type where liquid crystal is dispersed in a resin matrix. As a form of the PDLC type, there are, for example, a form in which the liquid crystal and the resin matrix are dispersed as a continuous phase and a form in which the liquid crystal is dispersed as a liquid crystal capsule in the resin matrix. In a state where no electric field is applied, alignment of liquid crystal molecules is not uniform, so that incident light is scattered in the dimming material due to a difference in refractive index between the resin matrix and the liquid crystal, and an opaque state is observed. When the electric field is applied, the liquid crystal molecules are aligned in a direction parallel to the electric field. At this time, since the refractive indexes of the resin matrix and the liquid crystal are equal, the incident light can be transmitted through the dimming material, and a transparent state is observed. Thus, in the PDLC type, light transmittance is adjusted by utilizing alignment of liquid crystal molecules.

The GHLC type is a type where a dichroic dye is dispersed in a liquid crystal. In the GHLC type, alignment directions of a dichroic dye and the liquid crystal can be changed between a state where the electric field is not applied and a state in which the electric field is applied, and the light transmittance can be adjusted.

When a dimmer laminate is produced using the dimming material, a spacer may be used to control a gap between two base materials. Examples of the spacer include resin particles. As an example of such resin particles, the following Patent Document 1 discloses polymer particles containing a constituent derived from a monomer component containing a styrene-based monomer and a (meth)acrylic acid alkyl ester in which the number of carbon atoms of the alkyl group is 1 to 18.

**Related Art Document**

**Patent Document**

Patent Document 1: JP 2022-079565 A

**SUMMARY OF THE INVENTION**

**PROBLEMS TO BE SOLVED BY THE INVENTION**

In the conventional resin particles as described in Patent Document 1, when the resin particles are used as the spacer, the resin particles are soft and easily crushed or thermally expanded in a high-temperature environment, so that a gap control effect may not be sufficiently exhibited. When such resin particles are used as spacer particles for a dimmer laminate, there is a problem that thickness unevenness of a dimming layer occurs in a resulting dimmer laminate, and as a result, a transmittance of the dimming layer varies.

When inorganic particles having low temperature dependency and high dimensional stability are used in order to enhance the gap control effect of the spacer, the inorganic particles may damage the base material (adherend). In particular, in the dimming film and the like using a film as the base material, when the particles are used as a gap material, there is a problem that the particles are likely to damage the base material during production or use of the dimming film because the particles are hard. In the dimming film, when the base material is scratched, abnormal alignment of the liquid crystal may occur.

An object of the present invention is to provide a silicone particle capable of controlling a gap between base materials with high accuracy even in a high-temperature environment, suppressing a variation in transmittance of a resulting dimmer laminate, and suppressing scratching of the base material. In addition, an object of the present invention is to provide a dimmer laminate capable of controlling a gap between base materials with high accuracy even in a high-temperature environment, suppressing a variation in transmittance of a resulting dimmer laminate, and suppressing scratching of the base material.

## PROBLEMS TO BE SOLVED BY THE INVENTION

In the present specification, the following silicone particles and dimmer laminate are disclosed.

Item 1. A silicone particle including: a silicone particle body; and a plurality of fillers, wherein at least one of the plurality of fillers is present inside the silicone particle body, and a ratio of a 10% K value at 90°C to the 10% K value at 25°C is 0.90 or more.

Item 2. The silicone particle according to item 1, wherein the 10% K value at 25°C is 2,000 N/mm$^2$ or less.

Item 3. The silicone particle according to item 1 or 2, wherein the 10% K value at 90°C is 1,800 N/mm$^2$ or less.

Item 4. The silicone particle according to any one of items 1 to 3, wherein a compression recovery rate at 25°C is 91% or less.

Item 5. The silicone particle according to any one of items 1 to 4, wherein a particle diameter is 30 μm or less.

Item 6. The silicone particle according to any one of items 1 to 5, wherein a CV value of the particle diameter is 15% or less.

Item 7. The silicone particle according to any one of items 1 to 6, wherein a visible light transmittance is 10% or less.

Item 8. The silicone particle according to any one of items 1 to 7, wherein the filler is a colorant.

Item 9. The silicone particle according to item 8, wherein the colorant is an inorganic particle, a pigment, or a dye.

Item 10. The silicone particle according to item 8 or 9, wherein the colorant is a white colorant or a black colorant.

Item 11. The silicone particle according to any one of items 1 to 10, wherein a content of the filler in 100% by weight of the silicone particle is 0.1% by weight or more and 30% by weight or less.

Item 12. The silicone particle according to item 11, wherein the content of the filler in 100% by weight of the silicone particle is 3.0% by weight or more and 10% by weight or less.

Item 13. A dimmer laminate including: a first base material; a second base material; and a dimming layer disposed between the first base material and the second base material, wherein the dimming layer contains the silicone particles according to any one of items 1 to 12.

## EFFECT OF THE INVENTION

The silicone particle according to the present invention includes the silicone particle body and the plurality of fillers, at least one of the plurality of fillers is present inside the silicone particle body, and the ratio of the 10% K value at 90°C to the 10% K value at 25°C is 0.90 or more. Since the silicone particle according to the present invention is provided with the above-described configuration, it is possible to control a gap between the base materials with high accuracy even in a high-temperature environment, suppress a variation in transmittance of a resulting dimmer laminate, and suppress scratching of the base material.

## BRIEF DESCRIPTION OF DRAWINGS

[Fig. 1] Fig. 1 is a sectional view schematically showing a silicone particle according to a first embodiment of the present invention.

[Fig. 2] Fig. 2 is a sectional view schematically showing a silicone particle according to a second embodiment of the present invention.

[Fig. 3] Fig. 3 is a sectional view schematically showing a PDLC-type dimmer laminate containing the silicone particles according to the first embodiment of the present invention.

[Fig. 4] Fig. 4 is a sectional view schematically showing an SPD-type dimmer laminate containing the silicone particles according to the first embodiment of the present invention.

[Fig. 5] Fig. 5 is a sectional view schematically showing a GHLC-type dimmer laminate containing the silicone particles according to the first embodiment of the present invention.

**MODE FOR CARRYING OUT THE INVENTION**

Hereinafter, the present invention will be described in detail. In the present specification, for example, "(meth) acryloxy" means one or both of "acryloxy" and "methacryloxy", and " (meth)acryl" means one or both of "acryl" and "methacryl".

(Silicone particle)

A silicone particle according to the present invention includes a silicone particle body and a plurality of fillers. In the silicone particle according to the present invention, at least one of the plurality of fillers is present inside the silicone particle body. In the silicone particle according to the present invention, a ratio of a 10% K value at 90°C to the 10% K value at 25°C is 0.90 or more.

Hereinafter, the present invention will be specifically described with reference to the drawings.

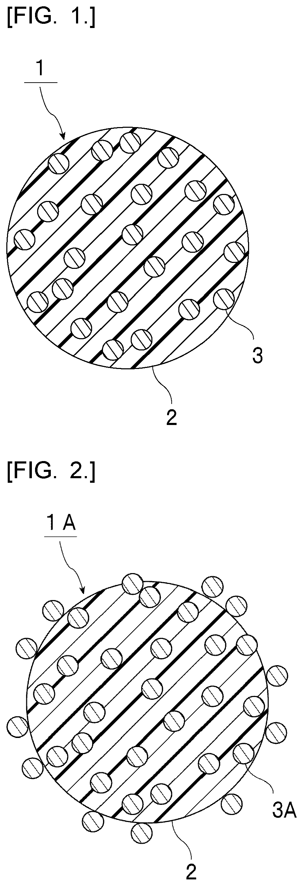

Fig. 1 is a sectional view schematically showing a silicone particle according to a first embodiment of the present invention.

A silicone particle 1 shown in Fig. 1 includes a silicone particle body 2 and a plurality of fillers 3. In the silicone particle 1, all of the plurality of fillers 3 are present inside the silicone particle body 2. In the silicone particle 1, the plurality of fillers 3 are dispersed in the silicone particle body 2.

In any one of the plurality of fillers 3 of the silicone particle 1, the entire one of the fillers is present inside the silicone particle body 2. When any one of the fillers of the silicone particle is viewed, the filler may be in the following state. In the silicone particle, the whole of any one of the fillers may be present inside the silicone particle body, and a part of any one of the fillers may be present inside the silicone particle body. A part of any one of the fillers may be present outside the silicone particle body.

Fig. 2 is a sectional view schematically showing a silicone particle according to a second embodiment of the present invention.

A silicone particle 1A shown in Fig. 2 includes a silicone particle body 2 and a plurality of fillers 3A. In the silicone particle 1A, at least one of the plurality of fillers 3A is present inside the silicone particle body 2. In the silicone particle 1A, a part of the plurality of fillers 3A is present inside the silicone particle body 2, and a part of the plurality of fillers 3A is present outside the silicone particle body 2. In the silicone particle 1A, the plurality of fillers 3A are present inside and outside the silicone particle body 2. In the silicone particle 1A, the plurality of fillers 3A are present inside the silicone particle body 2 and on an outer surface of the silicone particle body 2. In the silicone particle 1A, a part of the plurality of fillers 3A is disposed outside the silicone particle body 2. In the silicone particle 1A, the plurality of fillers 3A are dispersed in the silicone particle body 2.

In the silicone particle 1A, the filler 3A entirely present inside the silicone particle body 2, the filler 3A partially present outside the silicone particle body 2 (the filler 3A partially present inside the silicone particle body 2), and the filler 3A entirely present outside the silicone particle body 2 are present.

In the silicone particle, the ratio of the 10% K value at 90°C to the 10% K value at 25°C (10% K value at 90°C/10% K value at 25°C) is preferably 0.93 or more, more preferably 0.95 or more, and still more preferably 0.99 or more. When the ratio (10% K value at 90°C/10% K value at 25°C) is equal to or more than the above lower limit, the gap between the base materials can be controlled with higher accuracy even in a high-temperature environment, and scratching of the base material can be further suppressed. In the silicone particle, the ratio of the 10% K value at 90°C to the 10% K value at 25°C (10% K value at 90°C/10% K value at 25°C) is preferably 1.10 or more, more preferably 1.05 or more, and still more preferably 1.00 or more. When the ratio (10% K value at 90°C/10% K value at 25°C) is equal to or less than the above upper limit, the gap between the base materials can be controlled with higher accuracy even in a high-temperature environment, and scratching of the base material can be further suppressed. The ratio (10% K value at 90°C/10% K value at 25°C) is preferably equal to or more than the above lower limit and equal to or less than the upper limit.

Examples of a method of adjusting the ratio (10% K value at 90°C/10% K value at 25°C) to a preferable range include a method of adjusting the content of the filler and a method of adjusting a ratio of siloxane backbone calculated from a $^{29}$Si-NMR spectrum in the silicone particle.

The 10% K value at 90°C is preferably 2,000 N/mm$^2$ or less, more preferably 1,800 N/mm$^2$ or less, still more preferably 1,000 N/mm$^2$ or less, and particularly preferably 100 N/mm$^2$ or less. The 10% K value at 90°C is also preferably 1,800 N/mm$^2$ or less, also preferably 1,620 N/mm$^2$ or less, also preferably 900 N/mm$^2$ or less, and also preferably 90 N/mm$^2$ or less. When the 10% K value at 90°C is equal to or less than the above upper limit, the gap between the base materials can be controlled with higher accuracy even in a high-temperature environment, and scratching of the base material can be further suppressed. The 10% K value at 90°C is preferably 1 N/mm$^2$ or more, more preferably 5 N/mm$^2$ or more, still more preferably 10 N/mm$^2$ or more. The 10% K value at 90°C is also preferably 0.9 N/mm$^2$ or more, also preferably 4.5 N/mm$^2$ or more, and also preferably 9 N/mm$^2$ or more. When the 10% K value at 90°C is equal to or more than the above lower limit, the gap between the base materials can be controlled with higher accuracy even in a high-temperature environment, and scratching of the base material can be further suppressed. The 10% K value at 90°C is preferably equal to or more than the above lower limit and equal to or less than the upper limit.

The 10% K value at 25°C is preferably 2,000 N/mm$^2$ or less, more preferably 1,800 N/mm$^2$ or less, still more preferably 1,000 N/mm$^2$ or less, and particularly preferably 100 N/mm$^2$ or less. The 10% K value at 25°C is also preferably 2,222 N/mm$^2$ or less, also preferably 2,000 N/mm$^2$ or less, also preferably 1,111 N/mm$^2$ or less, and also preferably 111 N/mm$^2$ or less. When the 10% K value at 25°C is equal to or less than the above upper limit, the gap between the base materials can be controlled with higher accuracy, and scratching of the base material can be further suppressed. The 10% K value at 25°C is preferably 1 N/mm$^2$ or more, more preferably 5 N/mm$^2$ or more, still more preferably 10 N/mm$^2$ or more. The 10% K value at 25°C is also preferably 1.11 N/mm$^2$ or more, also preferably 5.56 N/mm$^2$ or more, and also preferably 11.11 N/mm$^2$ or more. When the 10% K value at 25°C is equal to or more than the above lower limit, the gap between the base materials can be controlled with higher accuracy, and scratching of the base material can be further suppressed. The 10% K value at 25°C is preferably equal to or more than the above lower limit and equal to or less than the upper limit.

The 10% K values at 25°C and 90°C can be measured as follows. Using a micro compression testing machine, the silicone particles are compressed at a smooth indenter end face of a cylinder (diameter of 50 $\mu$m, made of diamond) under the conditions of loading at 25°C or 90°C and a maximum test load of 20 mN over 60 seconds. The load value (N) and compression displacement (mm) at this time are measured. From the obtained measured value, the 10% K value can be obtained by the following formula. As the micro compression testing machine, for example, "Fischer Scope H-100" manufactured by FISCHER INSTRUMENTS K.K., or the like is used.

$$10\% \text{ K value } (N/mm^2) = (3/2^{1/2}) \cdot F \cdot S^{-3/2} \cdot R^{-1/2}$$

F: Load value (N) when the silicone particle is 10% compressed and deformed
S: Compression displacement (mm) when the silicone particle is 10% compressed and deformed
R: Radius of silicone particle (mm)

A compression recovery rate of the silicone particle at 25°C is preferably 91% or less, more preferably 90% or less, and still more preferably 88% or less. The compression recovery rate of the silicone particle at 25°C may be 80% or less. When the compression recovery rate of the silicone particle at 25°C is equal to or less than the above upper limit, the gap between the base materials can be controlled with higher accuracy. The compression recovery rate of the silicone particle at 25°C is preferably 70% or more, more preferably 75% or more, and still more preferably 80% or more. When the compression recovery rate of the silicone particle at 25°C is equal to or more than the above lower limit, the gap between the base materials can be controlled with higher accuracy. The compression recovery rate of the silicone particle at 25°C is preferably equal to or more than the above lower limit and equal to or less than the upper limit.

The compression recovery rate of the silicone particle at 25°C can be measured as follows.

The silicone particles are spread on a sample stage. The compression recovery rate is derived by applying a load to one sprayed silicone particle at a smooth indenter end face of a cylinder (diameter of 50 $\mu$m, made of diamond) at 25°C in the center direction of the silicone particle under the conditions of an original load value of 1.0 mN and a reverse load value of 10 mN using a micro compression testing machine, and analyzing a recovery behavior after the load is removed. The load-compression displacement during this period is measured, and the compression recovery rate can be obtained from the following equation. The loading rate is 0.33 mN/sec. As the micro compression testing machine, for example, "Fischer Scope H-100" manufactured by FISCHER INSTRUMENTS K.K., or the like is used.

$$\text{Compression recovery rate } (\%) = [L2/L1] \times 100$$

L1: Compression displacement from the origin load value to the reverse load value when a load is applied
L2: Unloading displacement from the reverse load value to the origin load value when a load is released

The particle diameter of the silicone particle is preferably 100 $\mu$m or less, more preferably 50 $\mu$m or less, and still more preferably 30 $\mu$m or less. When the particle diameter of the silicone particle is equal to or less than the above upper limit, practicality can be enhanced, and the gap between the base materials can be made more appropriate. The particle diameter of the silicone particle is preferably 3 $\mu$m or more, more preferably 5 $\mu$m or more, and still more preferably 8 $\mu$m or more. When the particle diameter of the silicone particle is equal to or more than the above lower limit, practicality can be enhanced, and the gap between the base materials can be made more appropriate. The particle diameter of the silicone particle is preferably equal to or more than the above lower limit and equal to or less than the upper limit.

The particle diameter of the silicone particle means a diameter when the silicone particle is a true sphere. When the silicone particle has a shape other than a true sphere, the particle diameter of the silicone particle means a diameter when it is assumed that the silicone particle is a true sphere corresponding to the volume.

The particle diameter of the silicone particle is preferably an average particle diameter, and more preferably a number average particle diameter. The particle diameter of the silicone particle can be measured by an arbitrary particle size distribution measuring apparatus. For example, the particle diameter can be measured using a particle size distribution measuring apparatus using principles such as laser light scattering, electric resistance change, and image analysis after imaging can be used. In addition, specific examples of a method for measuring the particle diameter of the silicone particle include a method for measuring the particle diameter of about 100,000 silicone particles using a particle size distribution measuring apparatus ("Multisizer 4" manufactured by Beckman Coulter, Inc.) and measuring the average value.

A variation coefficient (CV value) of the particle diameter of the silicone particle is preferably 15% or less, more preferably 10% or less, and still more preferably 8% or less. When variation coefficient (CV value) of the particle diameter of the silicone particle is equal to or less than the above upper limit, the gap between the base materials can be controlled with higher accuracy. The variation coefficient (CV value) of the particle diameter of the silicone particle is preferably 0% or more. The variation coefficient (CV value) of the particle diameter of the silicone particle is preferably equal to or more than the above lower limit and equal to or less than the upper limit.

The variation coefficient (CV value) of the particle diameter of the silicone particle can be measured as follows.

$$CV\ value\ (\%) = (\rho/Dn) \times 100$$

$\rho$: Standard deviation of particle diameter of the silicone particle
$Dn$: Average value of particle diameters of the silicone particles

The shape of the silicone particle is not particularly limited. The shape of the silicone particle may be a spherical shape, may be a shape other than the spherical shape, or may be a flat shape or the like.

From the viewpoint of controlling the gap between the base materials with higher accuracy, the aspect ratio of the silicone particles is preferably 1.5 or less, and more preferably 1.3 or less. A lower limit of the aspect ratio of the silicone particles is not particularly limited. The aspect ratio of the silicone particles may be 1.0 or more or 1.1 or more. The aspect ratio indicates a major axis/minor axis. The aspect ratio is preferably determined by observing 10 arbitrary silicone particles with an electron microscope or an optical microscope, provided that a maximum diameter and a minimum diameter are a major axis length and a minor axis length, respectively, determining the major axis length/minor axis length of each silicone particle, and calculating an average value of the major axis length/minor axis length of the 10 silicone particles.

From the viewpoint of improving handleability of the resulting dimming material and dimmer laminate, the specific gravity of the silicone particles is preferably 1.5 or less, more preferably 1.4 or less, and still more preferably 1.3 or less. The specific gravity of the silicone particles may be 0.9 or more, or may be 1.0 or more.

From the viewpoint of further suppressing the variation in transmittance of the resulting dimmer laminate, the visible light transmittance of the silicone particle is preferably 10% or less, more preferably 5% or less, still more preferably 1% or less, even more preferably 0.1% or less, and particularly preferably 0.05% or less. A lower limit of the visible light transmittance of the silicone particle is not particularly limited. The visible light transmittance of the silicone particle may be 0% or more or 0.05% or more.

The visible light transmittance of the silicone particle can be measured as follows. A plate-shaped sample having the same composition as that of the silicone particle is prepared, and spectrometry or the like is performed to measure the visible light transmittance in accordance with ISO 13837: 2008. The visible light transmittance can also be measured by a method conforming to JIS K 6714 standard, or the like.

The silicone particles are suitably used as a gap material (spacer). The silicone particles are preferably used as the gap material (spacer). Examples of the gap material (spacer) include a spacer for a liquid crystal display element, a gap control spacer, a spacer for stress relaxation, and a spacer for a dimmer laminate. The gap control spacer can be used for gap control of a laminated chip and an electronic component device for securing a standoff height and flatness, gap control of an optical component for securing smoothness of a glass surface and a thickness of an adhesive layer, and other gap controls. The spacer for stress relaxation can be used for stress relaxation of a sensor chip or the like, stress relaxation of a connection portion connecting two connection object members, and the like. Examples of the sensor chip include a semiconductor sensor chip. When the silicone particles are used as a gap material (spacer), the silicone particles can be sufficiently brought into contact with the connection object member and the like, and a sufficient gap control effect can be obtained.

The silicone particles are preferably used as the spacer for a liquid crystal display element, and are preferably used for a peripheral sealant for a liquid crystal display element. In the peripheral sealant for a liquid crystal display element, the silicone particle preferably functions as a spacer. The silicone particles may not be a spacer for a liquid crystal display element, and may be a gap control spacer, a spacer for stress relaxation, and a spacer for a dimmer laminate.

When the silicone particles are used as a spacer for a dimming material, the dimming material is preferably a dimming glass, a dimming film, or the like. The dimming material such as the dimming glass and the dimming film is preferably used for a window glass of a vehicle, a partition, or the like. Examples of the vehicle include a vehicle, a ship, and an aircraft. The dimming material such as the dimming glass and the dimming film is preferably used for a window glass or a partition of a vehicle such as a vehicle, a ship, or an aircraft. The dimming material is preferably a window glass or a partition, and more preferably a window glass or a partition of a vehicle such as a vehicle, a ship, or an aircraft. The dimming material may be a window glass or a partition of a vehicle such as a vehicle, a ship, or an aircraft. The vehicle is preferably a transportation system. The partition may be a member that is disposed between seats of a vehicle and partitions the seats. The partition may be a partition used in a state where main surfaces on both sides are in contact with the atmosphere.

Hereinafter, each component of the silicone particle will be described in detail.

<Silicone particle body>

The silicone particle includes a silicone particle body. The silicone particle and the silicone particle body preferably contain a silicone resin. The silicone resin has a siloxane skeleton (siloxane bond).

From the viewpoint of controlling the gap over a wide temperature range with higher accuracy, the material of the silicone particle body is preferably an organopolysiloxane, and is also preferably a silane alkoxide. One kind of the organopolysiloxane and the silane alkoxide may be used alone, or two or more kinds thereof may be used in combination.

From the viewpoint of more easily adjusting the ratio (10% K value at 90°C/10% K value at 25°C) to a preferable range, the ratio of a siloxane backbone calculated from the $^{29}$Si-NMR spectrum in the silicone particle is preferably 50% or more, more preferably 60% or more, and still more preferably 70% or more. The upper limit of the ratio of the siloxane backbone calculated from the $^{29}$Si-NMR spectrum in the silicone particle is not particularly limited. The ratio of the siloxane backbone calculated from the $^{29}$Si-NMR spectrum in the silicone particle may be 100% or less, less than 100%, 99% or less, or 90% or less.

The ratio of the siloxane skeleton can be measured by performing nuclear magnetic resonance analysis (NMR) on the silicone particles using an NMR spectrum analyzer (for example, "JNM-ECX 400" manufactured by JEOL RESONANCE Co. Ltd.) or the like, and calculating a ratio of an integral value of a peak area of the siloxane skeleton to an integral value 100% of a peak area of all signals.

From the viewpoint of controlling the gap with higher accuracy, the silane alkoxide preferably contains a silane alkoxide A represented by the following formula (1A) or a silane alkoxide B represented by the following formula (1B). The silane alkoxide may contain the silane alkoxide A represented by the following formula (1A) or may contain the silane alkoxide B represented by the following formula (1B).

$$Si\ (R1)_n(OR2)_{4-n}\ \cdots \qquad (1A)$$

In the formula (1A), R1 represents a hydrogen atom, a phenyl group or an alkyl group having 1 to 30 carbon atoms, R2 represents an alkyl group having 1 to 6 carbon atoms, and n represents an integer of 0 to 2. When n is 2, a plurality of R1s may be the same or different. A plurality of R2s may be the same or different.

When R1 in the formula (1A) is an alkyl group having 1 to 30 carbon atoms, examples of R1 include a methyl group, an ethyl group, a propyl group, an isopropyl group, an isobutyl group, an n-hexyl group, a cyclohexyl group, an n-octyl group, and an n-decyl group. The number of carbon atoms in the alkyl group is preferably 10 or less, and more preferably 6 or less. The alkyl group includes a cycloalkyl group.

Examples of R2 in the formula (1A) include a methyl group, an ethyl group, an n-propyl group, an isopropyl group, an n-butyl group, and an isobutyl group.

Examples of the silane alkoxide A include tetramethoxysilane, tetraethoxysilane, methyltrimethoxysilane, methyltriethoxysilane, ethyltrimethoxysilane, ethyltriethoxysilane, isopropyltrimethoxysilane, isobutyltrimethoxysilane, cyclohexyltrimethoxysilane, n-hexyltrimethoxysilane, n-octyltriethoxysilane, n-decyltrimethoxysilane, phenyltrimethoxysilane, dimethyldimethoxysilane, dimethyldiethoxysilane, diisopropyldimethoxysilane, and diphenyldimethoxysilane. Silane alkoxides other than these may be used.

$$Si\ (R1)_n(OR2)_{4-n}\ \cdots \qquad (1B)$$

In the formula (1B), R1 represents a hydrogen atom, a phenyl group, an alkyl group having 1 to 30 carbon atoms, or an organic group having a polymerizable double bond and 1 to 30 carbon atoms, R2 represents an alkyl group having 1 to 6 carbon atoms, and n represents an integer of 0 to 2. When n is 2, a plurality of R1s may be the same or different. A plurality of R2s may be the same or different. At least one R1 is preferably an organic group having a polymerizable double bond and 1 to 30 carbon atoms, more preferably a vinyl group, a styryl group, or a (meth)acryloxy group, still more preferably a vinyl group or a (meth)acryloxy group, and particularly preferably a (meth)acryloxy group.

When R1 in the formula (1B) is an alkyl group having 1 to 30 carbon atoms, examples of R1 include a methyl group, an ethyl group, a propyl group, an isopropyl group, an isobutyl group, an n-hexyl group, a cyclohexyl group, an n-octyl group, and an n-decyl group. The number of carbon atoms in the alkyl group is preferably 10 or less, and more preferably 6 or less. The alkyl group includes a cycloalkyl group.

Examples of the polymerizable double bond include a carbon-carbon double bond. When R1 in the formula (1B) is an organic group having a polymerizable double bond and 1 to 30 carbon atoms, examples of R1 include a vinyl group, a styryl group, an allyl group, an isopropenyl group, and a 3-(meth) acryloxyalkyl group. Examples of the styryl group include a p-styryl group, an o-styryl group, and an m-styryl group. Examples of the (meth)acryloxyalkyl group include a (meth) acryloxymethyl group, a (meth)acryloxyethyl group, and a (meth)acryloxypropyl group. The number of carbon atoms of the organic group having a polymerizable double bond and 1 to 30 carbon atoms is preferably 2 or more, and preferably 30 or less, more preferably 10 or less.

Examples of R2 in the formula (1B) include a methyl group, an ethyl group, an n-propyl group, an isopropyl group, an n-butyl group, and an isobutyl group.

From the viewpoint of controlling the gap with higher accuracy, the silane alkoxide preferably contains a dialkoxysilane.

From the viewpoint of more easily adjusting the particle diameter, the silane alkoxide preferably contains a silane alkoxide having a polymerizable functional group, and more preferably contains a silane alkoxide having a polymerizable double bond. Examples of the silane alkoxide having a polymerizable double bond include vinyltrimethoxysilane, vinyltriethoxysilane, dimethoxymethylvinylsilane, dimethoxyethylvinylsilane, diethoxymethylvinylsilane, diethoxyethylvinylsilane, ethylmethyldivinylsilane, methylvinyldimethoxysilane, ethylvinyldimethoxysilane, methylvinyldiethoxysilane, ethylvinyldiethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, and 3-acryloxypropyltrimethoxysilane. The silane alkoxide may be a cyclic siloxane or a modified (reactive) silicone oil. Examples of the cyclic siloxane include decamethylcyclopentasiloxane. Examples of the modified silicone oil include one end-modified silicone oil, both-terminal silicone oil, and side-chain type silicone oil.

Examples of a specific method for producing the silicone particle body include a method in which the silane alkoxide is condensed in advance to obtain an oligomer, and then a polymerization reaction is performed by a suspension polymerization method, a dispersion polymerization method, a mini-emulsion polymerization method, an emulsion polymerization method, or the like to produce a silicone particle body.

From the viewpoint of further suppressing the variation in transmittance of the resulting dimmer laminate, a refractive index of the silicone particle body is preferably 1.39 or more, more preferably 1.40 or more, and preferably 1.44 or less, more preferably 1.43 or less.

The refractive index of the silicone particle body can be measured in accordance with JIS K7142:2014 Plastics-Determination of refractive index Method B.

The particle diameter of the silicone particle body is preferably 99.8 $\mu$m or less, more preferably 49.8 $\mu$m or less, and still more preferably 29.8 $\mu$m or less. When the particle diameter of the silicone particle body is equal to or less than the above upper limit, the gap between the base materials can be controlled with higher accuracy, and scratching of the base material can be further suppressed. The particle diameter of the silicone particle body is preferably 2.8 $\mu$m or more, more preferably 4.8 $\mu$m or more, and still more preferably 7.8 $\mu$m or more. When the particle diameter of the silicone particle body is equal to or more than the above lower limit, the gap between the base materials can be controlled with higher accuracy, and scratching of the base material can be further suppressed. The particle diameter of the silicone particle body is preferably equal to or more than the above lower limit and equal to or less than the upper limit.

The particle diameter of the silicone particle body means a diameter when the silicone particle body is a true sphere. When the silicone particle body has a shape other than a true sphere, the particle diameter of the silicone particle body means a diameter when it is assumed that the silicone particle body is a true sphere corresponding to the volume.

The particle diameter of the silicone particle body is preferably an average particle diameter, and more preferably a number average particle diameter. The particle diameter of the silicone particle body can be measured by an arbitrary particle size distribution measuring apparatus. For example, the particle diameter can be measured using a particle size distribution measuring apparatus using principles such as laser light scattering, electric resistance change, and image analysis after imaging can be used. In addition, specific examples of a method for measuring the particle diameter of the silicone particle body include a method for measuring the particle diameter of about 100,000 silicone particle bodies using a particle size distribution measuring apparatus ("Multisizer 4" manufactured by Beckman Coulter, Inc.) and calculating the average particle diameter.

From the viewpoint of controlling the gap between the base materials with higher accuracy, the variation coefficient (CV value) of the particle diameter of the silicone particle body is preferably 15% or less, more preferably 10% or less, and still more preferably 8% or less. The variation coefficient (CV value) of the particle diameter of the silicone particle body is preferably 0% or more. The variation coefficient (CV value) of the particle diameter of the silicone particle body is preferably equal to or more than the above lower limit and equal to or less than the upper limit.

The variation coefficient (CV value) of the particle diameter of the silicone particle body can be measured as

follows.

$$CV \text{ value (\%)} = (\rho/Dn) \times 100$$

ρ: Standard deviation of particle diameter of the silicone particle body
Dn: Average value of particle diameters of the silicone particle bodies

The shape of the silicone particle body is not particularly limited. The shape of the silicone particle body may be a spherical shape, may be a shape other than the spherical shape, or may be a flat shape or the like.

The content of the silicone particle body in 100% by weight of the silicone particle is preferably 80% by weight or more, more preferably 85% by weight or more, still more preferably 90% by weight or more, particularly preferably 95% by weight or more, and preferably 99.9% by weight or less, more preferably 99% by weight or less, and still more preferably 98% by weight or less. When the content of the silicone particle body is equal to or more than the above lower limit and equal to or less than the upper limit, the gap between the base materials can be controlled with higher accuracy, and scratching of the base material can be further suppressed.

The content of the silicone resin in 100% by weight of the silicone particle body is preferably 80% by weight or more, more preferably 85% by weight or more, still more preferably 90% by weight or more, and particularly preferably 95% by weight or more. When the content of the silicone resin is equal to or more than the above lower limit, the gap between the base materials can be controlled with higher accuracy. The upper limit of the content of the silicone resin is not particularly limited. The content of the silicone resin in 100% by weight of the silicone particle body may be 100% by weight (total amount), 100% by weight or less, or less than 100% by weight.

<Filler>

The silicone particle includes a plurality of fillers. In the silicone particle, at least one of the plurality of fillers is present inside the silicone particle body.

In the silicone particle, the whole of the filler may be present inside the silicone particle body, a part of the filler may be present inside the silicone particle body, and a part of the filler may be present outside the silicone particle body. In the silicone particle, all of the fillers may be present inside the silicone particle body, some of the fillers may be present inside the silicone particle body, and some of the fillers may be present outside the silicone particle body.

In the silicone particle, the whole of any one of the fillers may be present inside the silicone particle body, a part of any one of the fillers may be present inside the silicone particle body, and a part of any one of the fillers may be present outside the silicone particle body. In the silicone particle, the whole of any one of the fillers may be present outside the silicone particle body, and at least one of the plurality of fillers is present inside the silicone particle body.

In the filler in which a part of the filler is present inside the silicone particle body, the volume of a part present inside the silicone particle in 100 vol% of the filler is preferably 50 vol% or more, more preferably 60 vol% or more, and still more preferably 70 vol% or more. The volume of the part present inside the silicone particle in 100 vol% of the filler is preferably 99 vol% or less, more preferably 95 vol% or less, and still more preferably 90 vol% or less. When the volume of the part present inside the silicone particle is equal to or more than the above lower limit and equal to or less than the above upper limit, the filler can be more favorably fixed to a surface of the silicone particle body. The volume of the part present inside the silicone particle is preferably equal to or more than the above lower limit and equal to or less than the upper limit.

From the viewpoint of improving the dispersibility of the silicone particle, it is preferable that in the silicone particle, a filler in which a part of the filler is present inside the silicone particle body and a filler in which the entire filler is present inside the silicone particle are mixed.

From the viewpoint of more effectively exhibiting the effect of the present invention, in the silicone particle, the number of fillers present inside the silicone particle is preferably 70% or more, more preferably 80% or more, still more preferably 90% or more, and preferably 100% or less, relative to 100% of the total number of the fillers. When one filler is viewed, if the whole or a part of the filler is present inside the silicone particle body, it is determined that the filler corresponds to the filler present inside the silicone particle. When one filler is viewed, if at least a part of the filler is present inside the silicone particle body, it is determined that the filler corresponds to the filler present inside the silicone particle. When one filler is viewed, if the entire filler is not present inside the silicone particle body, it is determined that the filler does not correspond to the filler present inside the silicone particle.

In the silicone particle, the plurality of fillers may be dispersed or unevenly distributed inside the silicone particle body. From the viewpoint of further suppressing scratching of the base material of the resulting dimmer laminate, in the silicone particle, the plurality of fillers are preferably dispersed inside the silicone particle body.

Examples of the filler include colorants, alumina, talc, barium titanate, and ferrite.

From the viewpoint of improving a light shielding property, the filler is preferably a colorant.

The colorant may be a white colorant, a black colorant, a red colorant, a blue colorant, or a yellow colorant. From the viewpoint of improving the light shielding property, the colorant is preferably a white colorant or a black colorant.

Examples of the colorant include inorganic particles, pigments, and dyes. One kind of the colorants may be used alone, and two or more kinds thereof may be used in combination.

From the viewpoint of improving the light shielding property, the colorant is preferably an inorganic particle, a pigment, a dye, or the like.

Examples of the inorganic particles include carbon black particles, carbon nanotube particles, titanium black particles, graphene particles, iron oxide particles, zinc oxide particles, calcium carbonate particles, alumina particles, kaolin clay particles, calcium silicate particles, magnesium oxide particles, magnesium hydroxide particles, aluminum hydroxide particles, magnesium carbonate particles, talc particles, feldspar powder particles, mica particles, barite particles, barium carbonate particles, titanium oxide particles, silica particles, and glass beads. The inorganic particles are preferably carbon black particles or titanium black particles.

The average particle diameter of the inorganic particles is preferably 0.01 $\mu$m or more, more preferably 0.5 $\mu$m or more, and preferably 30 $\mu$m or less, more preferably 20 $\mu$m or less, still more preferably 10 $\mu$m or less, particularly preferably 5 $\mu$m or less. The average particle diameter indicates a weight average particle diameter. The average particle diameter can be measured by a dynamic light scattering method using a laser as a light source using a light scattering measuring device. Examples of the light scattering measuring device include "DLS-6000AL" manufactured by Otsuka Electronics Co., Ltd.

Examples of the dye include pyrene-based dyes, aminoketone-based dyes, anthraquinone-based dyes, and azo-based dyes.

Examples of the pyrene-based dye include Solvent Green 5 (CAS79869-59-3) and Solvent Green 7 (CAS6358-69-6).

Examples of the aminoketone-based dye include Solvent Yellow 98 (CAS12671-74-8), Solvent Yellow 85 (CAS12271-01-1), Solvent Red 179 (CAS8910-94-5), and Solvent Red 135 (CAS71902-17-5).

Examples of the anthraquinone-based dye include Solvent Yellow 163 (CAS13676091-0), Solvent Red 207 (CAS15958-69-6), Disperse Red 92 (CAS12236-11-2), Solvent Violet 13 (CAS81-48-1), Disperse Violet 31 (CAS6408-72-6), Solvent Blue 97 (CAS61969-44-6), Solvent Blue 45 (CAS37229-23-5), Solvent Blue 104 (CAS116-75-6), and Disperse Blue 214 (CAS104491-84-1).

Examples of the azo-based dyes include Solvent Yellow 30 (CAS3321-10-4), Solvent Red 164 (CAS70956-30-8), and Disperse Blue 146 (CAS88650-91-3).

The pigment may be an organic pigment or an inorganic pigment. The organic pigment may or may not have a metal atom. The pigment may be a white pigment, a red pigment, a blue pigment, a yellow pigment, or a black pigment. One kind of the pigments may be used alone, and two or more kinds thereof may be used in combination.

The pigment is more preferably an organic pigment, more preferably a black pigment, and still more preferably an organic black pigment from the viewpoint of effectively suppressing light transmission, effectively suppressing discoloration, and further enhancing the conduction reliability of the resulting dimmer laminate.

Examples of the organic black pigment include anthraquinone-based pigments, anthanthrone-based pigments, dianthraquinonyl-based pigments, anthrapyrimidine-based pigments, flavanthrone-based pigments, diketopyrrolopyrrole-based pigments, quinacridone-based pigments, diketopyrrolopyrrole based pigments, indigo-thioindigo-based pigments, perinone-based pigments, perylene-based pigments, phthalocyanine-based pigments, halogenated phthalocyanine-based pigments, indoline-based pigments, isoindoline-based pigments, isoindolinone-based pigments, indanthrone-based pigments, dioxazine-based pigments, quinophthalone pigments, nickel azo pigments, metal complex pigments, azo-based pigments (insoluble azo-based pigment, soluble azo-based pigment, high molecular weight azo-based pigment, and azomethine azo-based black pigment), and aniline black-based pigments.

The average particle diameter of the organic black pigment is preferably 1 nm or more, more preferably 10 nm or more, and preferably 500 nm or less, more preferably 300 nm or less, still more preferably 100 nm or less. The average particle diameter indicates a weight average particle diameter. The average particle diameter can be measured by a dynamic light scattering method using a laser as a light source using a light scattering measuring device. Examples of the light scattering measuring device include "DLS-6000AL" manufactured by Otsuka Electronics Co., Ltd.

From the viewpoint of further suppressing the variation in transmittance of the resulting dimmer laminate, the colorant preferably contains an organic black pigment, titanium black particles, or carbon black particles, and more preferably contains carbon black particles.

The content of the filler in 100% by weight of the silicone particle is preferably 0.1% by weight or more, more preferably 0.5% by weight or more, still more preferably 1.0% by weight or more, particularly preferably 3.0% by weight or more, and preferably 30% by weight or less, more preferably 20% by weight or less, still more preferably 15% by weight or less, particularly preferably 10% by weight or less. When the content of the filler is equal to or more than the above lower limit and equal to or less than the above upper limit, the ratio (10% K value at 90°C/10% K value at 25°C) can be more easily adjusted within a preferable range, so that the variation in transmittance of the resulting dimmer laminate can be further suppressed, and scratching of the base material can be further suppressed. When the silicone particle contains two or more kinds of fillers, the content of the filler means the sum of the contents of the respective fillers.

The content of the colorant in 100% by weight of the silicone particle is preferably 0.1% by weight or more, more preferably 0.5% by weight or more, still more preferably 1.0% by weight or more, particularly preferably 3.0% by weight or more, and preferably 30% by weight or less, more preferably 20% by weight or less, still more preferably 15% by weight or less, particularly preferably 10% by weight or less. When the content of the colorant is equal to or more than the above lower limit and equal to or less than the above upper limit, the variation in transmittance of the resulting dimmer laminate can be further suppressed. When the silicone particle contains two or more kinds of colorants, the content of the colorant means the sum of the contents of the respective colorants.

<Other components>

The silicone particles may contain other components as necessary. Examples of the other components include a polymerization initiator, a pigment dispersant, a resin particle dispersant, and a surfactant. One kind of the other components may be used alone, and two or more kinds thereof may be used in combination.

(Dimmer laminate)

The dimmer laminate according to the present invention includes a first base material, a second base material, and a dimming layer disposed between the first base material and the second base material. In the dimmer laminate according to the present invention, the dimming layer contains the silicone particles.

Since the dimmer laminate according to the present invention is provided with the above-described configuration, it is possible to control the gap between the base materials with high accuracy even in a high-temperature environment, suppress the variation in transmittance of the resulting dimmer laminate, and suppress scratching of the base material.

The dimmer laminate may be a GHLC (Guest-Host Liquid Crystal) type dimmer laminate, a PDLC (Polymer Dispersed Liquid Crystal) type dimmer laminate, or an SPD (Suspended Particle Device) type dimmer laminate. The dimmer laminate is preferably the GHLC type, SPD type, or PDLC type dimmer laminate, and more preferably the SPD type or PDLC type dimmer laminate. The dimmer laminate may not be a liquid crystal display device. The dimmer laminate may not be a liquid crystal display element.

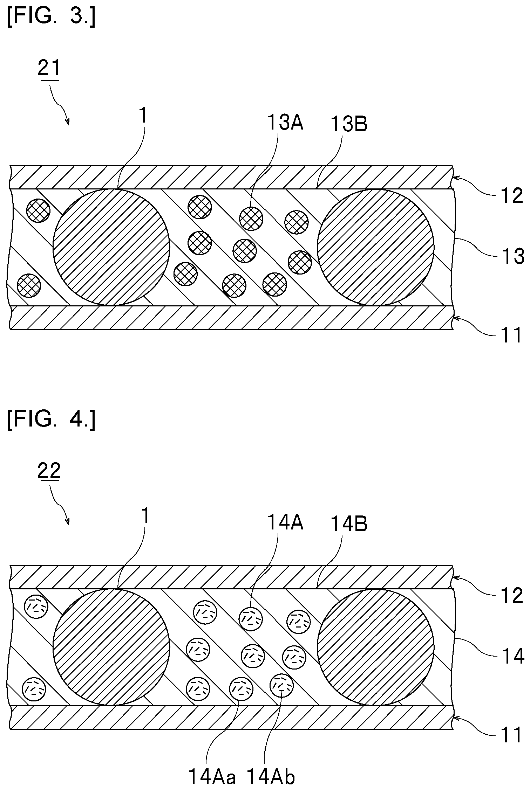

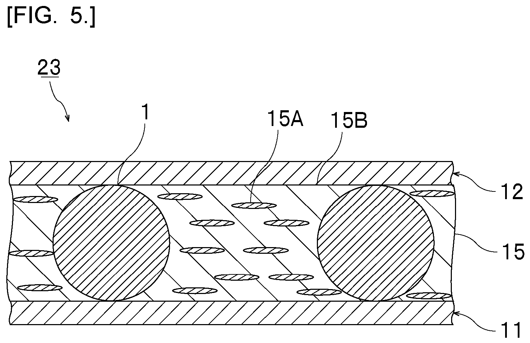

Fig. 3 is a sectional view schematically showing the PDLC-type dimmer laminate containing the silicone particles according to the first embodiment of the present invention. Fig. 4 is a sectional view schematically showing the SPD-type dimmer laminate containing the silicone particles according to the first embodiment of the present invention. Fig. 5 is a sectional view schematically showing the GHLC-type dimmer laminate containing the silicone particles according to the first embodiment of the present invention. In Figs. 3 to 5, the size, thickness, shape, addition amount, etc. of the dimming layer and the silicone particle are appropriately changed from the actual size and shape for convenience of illustration.

A PDLC-type dimmer laminate 21 shown in Fig. 3 includes a first base material 11, a second base material 12, and a dimming layer 13. The dimming layer 13 is sandwiched between the first base material 11 and the second base material 12. The dimming layer 13 is disposed between the first base material 11 and the second base material 12. Between the first base material 11 and the second base material 12, a sealing agent may be disposed around the dimming layer 13.

The dimming layer 13 includes the silicone particle 1, a liquid crystal capsule 13A, and a binder 13B. The liquid crystal capsule 13A is a liquid crystal material. The liquid crystal capsule 13A is dispersed in the binder 13B. The liquid crystal capsule 13A is held in a capsule form in the binder 13B. The liquid crystal material may be dispersed in the binder in the form of a capsule and may be dispersed in the binder as a continuous phase.

The silicone particle 1 is in contact with the first base material 11 and the second base material 12. The silicone particle 1 controls the gap between the first base material 11 and the second base material 12.

Electrodes are formed on the surface of the first base material 11 and on the surface of the second base material 12 (not shown). Examples of the material for the electrode include indium tin oxide (ITO). The electrode is preferably a transparent electrode.

In the state where no electric field is applied to the PDLC-type dimmer laminate 21, the alignment of the liquid crystal molecules in the liquid crystal capsule 13A is not uniform, so that incident light is scattered in the binder 13B due to a difference in refractive index between the binder 13B and the liquid crystal material, and an opaque state is shown.

When the electric field is applied to the PDLC-type dimmer laminate 21, the liquid crystal molecules in the liquid crystal capsule 13A are aligned in a direction parallel to the electric field. In this state, since the refractive indexes of the binder 13B and the liquid crystal material are equal, light can be transmitted, and a transparent state is obtained.

A SPD-type dimmer laminate 22 shown in Fig. 4 includes the first base material 11, the second base material 12, and a dimming layer 14. The dimming layer 14 is sandwiched between the first base material 11 and the second base material 12. The dimming layer 14 is disposed between the first base material 11 and the second base material 12.

The dimming layer 14 includes the silicone particle 1, droplets 14A of a light-modulating suspension, and a resin matrix 14B. The droplets 14A of the light-modulating suspension are dispersed in the resin matrix 14B. The droplet 14A of the light-modulating suspension is held in a droplet state in the resin matrix 14B.

The droplet 14A of the light-modulating suspension includes a dispersion medium 14Aa and light-modulating particles 14Ab. The light-modulating particles 14Ab are dispersed in the dispersion medium 14Aa.

The silicone particle 1 is in contact with the first base material 11 and the second base material 12. The silicone particle 1 controls the gap between the first base material 11 and the second base material 12.

Electrodes are formed on the surface of the first base material 11 and on the surface of the second base material 12 (not shown). Examples of the material for the electrode include indium tin oxide (ITO). The electrode is preferably a transparent electrode.

In the state where no electric field is applied to the SPD-type dimmer laminate 22, incident light is absorbed, scattered or reflected to the light-modulating particles 14Ab by Brownian motion of the light-modulating particles 14Ab dispersed in the dispersion medium 14Aa included in the droplet 14A of the light-modulating suspension, and cannot be transmitted through the dimming layer 14.

When the electric field is applied to the SPD-type dimmer laminate 22, the light-modulating particles 14Ab are aligned in the direction parallel to the electric field. Thus, incident light can pass between the aligned light-modulating particles 14Ab, and can be transmitted through the dimming layer 14.

A GHLC-type dimmer laminate 23 shown in Fig. 5 includes the first base material 11, the second base material 12, and a dimming layer 15. The dimming layer 15 is sandwiched between the first base material 11 and the second base material 12. The dimming layer 15 is disposed between the first base material 11 and the second base material 12. Between the first base material 11 and the second base material 12, a sealing agent may be disposed around the dimming layer 15.

The dimming layer 15 includes the silicone particles 1, a dichroic dye 15A, and a liquid crystal material 15B (liquid crystal). The dichroic dye 15A is dispersed in the liquid crystal material 15B.

The silicone particle 1 is in contact with the first base material 11 and the second base material 12. The silicone particle 1 controls the gap between the first base material 11 and the second base material 12.

Electrodes are formed on the surface of the first base material 11 and on the surface of the second base material 12 (not shown). Examples of the material for the electrode include indium tin oxide (ITO). The electrode is preferably a transparent electrode.

Fig. 5 shows a state where no electric field is applied to the dimmer laminate 23 of the GHLC type. In the state where no electric field is applied, the dichroic dye 15A is oriented in a direction perpendicular to a thickness direction of the GHLC-type dimmer laminate 23. Although an alignment property is not shown, the liquid crystal material 15B is also aligned in the direction perpendicular to the thickness direction of the GHLC-type dimmer laminate 23. When the electric field is applied to the GHLC-type dimmer laminate 23, the dichroic dye 15A and the liquid crystal material 15B are aligned in a direction parallel to the electric field, that is, in the thickness direction of the GHLC-type dimmer laminate 23. Thus, incident light can pass between the aligned dichroic dyes 15A, and can be transmitted through the dimming layer 15.

<Dimming layer>

The dimming layer preferably has a dimming property. The dimming property is a property where the visible light transmittance changes depending on whether or not an electric field is applied, and the amount of incident light can be adjusted. The dimming layer contains the silicone particles.

(PDLC type)

The dimming layer preferably further includes a binder and a liquid crystal material dispersed in the binder.

The liquid crystal material is not particularly limited, and may be any liquid crystal material as long as the liquid crystal material has a property that its alignment changes depending on application of an electric field. The liquid crystal material may be dispersed as a continuous phase in the binder, or may be dispersed in the binder in a liquid crystal drop shape or a liquid crystal capsule shape. Examples of the liquid crystal material include nematic liquid crystal and cholesteric liquid crystal.

Examples of the material of the nematic liquid crystal include a cyanobiphenyl series, a phenyl ester series, an azoxybenzene series, a fluorine-containing biphenyl series, a carbonate ester series, and a Schiff base series. One kind of the nematic liquid crystal materials may be used alone, and two or more kinds thereof may be used in combination.

Examples of materials of the cholesteric liquid crystal include a steroid cholesterol derivative, a nematic liquid crystal such as a Schiff base series, an azo series, an azoxy series, a benzoate ester series, a biphenyl series, a terphenyl series, a cyclohexylcarboxylate ester series, a phenylcyclohexane series, a biphenylcyclohexane series, a pyrimidine series, a dioxane series, a cyclohexylcyclohexane ester series, a cyclohexylethane series, a cyclohexane series, a tolan series, an alkenyl series, a stilbene series and a condensed polycyclic series, smectic liquid crystal, and materials obtained by adding a chiral component including an optically active material such as a Schiff base series, an azo series, an ester series, and a biphenyl series to mixed liquid crystals thereof. One kind of the cholesteric liquid crystal materials may be used alone, and two or more kinds thereof may be used in combination.

The binder holds the liquid crystal material and suppresses the flow of the liquid crystal material. The binder resin is not particularly limited. It is preferable that the binder does not dissolve in the liquid crystal material, has a strength that can withstand external force, and has high transparency to reflected light and incident light. Examples of materials for the binder include watersoluble polymer materials such as gelatin, polyvinyl alcohol, cellulose derivatives, polyacrylic acid polymers, ethyleneimine, polyethylene oxide, polyacrylamide, polystyrene sulfonate, polyamidine, and isoprene sulfonic acid polymers, and materials that can be made into an aqueous emulsion such as a fluororesin, a silicone resin, an acrylic resin, a urethane resin, and an epoxy resin. One kind of the materials for the binder may be used alone, and two or more kinds thereof may be used in combination.

The binder is preferably cross-linked with a cross-linking agent. The cross-linking agent is not particularly limited. The cross-linking agent is preferably a cross-linking agent in which crosslinking is formed between the binders and which can harden the binder, make the binder hardly soluble, or make the binder insoluble. Examples of the cross-linking agent include acetaldehyde, glutaraldehyde, glyoxal, potassium alum hydrate of a multivalent metal salt compound, adipic acid dihydrazide, melamine formalin oligomer, ethylene glycol diglycidyl ether, polyamide epichlorohydrin, and polycarbodiimide. One kind of the cross-linking agents may be used alone, and two or more kinds thereof may be used in combination.

(SPD type)

The dimming layer preferably further includes a resin matrix and a light-modulating suspension dispersed in the resin matrix.

The light-modulating suspension includes a dispersion medium and light-modulating particles dispersed in the dispersion medium.

Examples of the light-modulating particles include carbon-based materials such as polyiodide and carbon black, metal materials such as copper, nickel, iron, cobalt, chromium, titanium, and aluminum, and inorganic compound materials such as silicon nitride, titanium nitride, and aluminum oxide. These materials may be particles coated with a polymer. One kind of the light-modulating particles may be used alone, and two or more kinds thereof may be used in combination.

The dispersion medium disperses the light-modulating particles in a flowable state. Preferably, the dispersion medium is preferably a material that selectively adheres to the light-modulating particles to cover the light-modulating particles, acts to cause the light-modulating particles to be shifted to the phase-separated droplet phase at the time of phase separation from the resin matrix, has no electrical conductivity, and has no affinity with the resin matrix. Furthermore, the dispersion medium is preferably a liquid copolymer having a refractive index approximate to that of the resin matrix when the dispersion medium is made into a dimmer laminate. As the liquid copolymer, preferred is a (meth)acrylic acid ester oligomer having a fluoro group or a hydroxyl group, and more preferred is a (meth)acrylic acid ester oligomer having a fluoro group and a hydroxyl group. When such a copolymer is used, the monomer units of either the fluoro group or the hydroxyl group are faced toward the light-modulating particles, and the remaining monomer units stabilizes droplets of the light-modulating suspension in the resin matrix. Therefore, the light-modulating particles are easily dispersed in the light-modulating suspension, and at the time of the phase separation from the resin matrix, the light-modulating particles are easily introduced into the phase-separated droplets.

Examples of the (meth)acrylic acid ester oligomer having the fluoro group or the hydroxyl group include 2,2,2-trifluoroethyl methacrylate/butyl acrylate/2-hydroxyethyl acrylate copolymer, 3,5,5-trimethylhexyl acrylate/2-hydroxypropyl acrylate/fumaric acid copolymer, butyl acrylate/2-hydroxyethyl acrylate copolymer, 2,2,3,3-tetrafluoropropyl acrylate/butyl acrylate/2-hydroxyethyl acrylate copolymer, 1H, 1H, 5H-octafluoropentyl acrylate/butyl acrylate/2-hydroxyethyl acrylate copolymer, 1H,1H,2H,2H-heptadecafluorodecyl acrylate/butyl acrylate/2-hydroxyethyl acrylate copolymer, 2,2,2-trifluoroethyl methacrylate/butyl acrylate/2-hydroxyethyl acrylate copolymer, 2,2,3,3-tetrafluoropropyl methacrylate/butyl acrylate/2-hydroxyethyl acrylate copolymer, 1H, 1H, 5H-octafluoropentyl methacrylate/butyl acrylate/2-hydroxyethyl acrylate copolymer, 1H, 1H, 2H, 2H-heptadecafluorodecyl methacrylate/butyl acrylate/2-hydroxyethyl acrylate copolymer. These (meth)acrylic acid ester oligomers have each preferably both of the fluoro group and the hydroxyl group.

The weight average molecular weight of the (meth)acrylic ester oligomer is preferably 1000 or more, more preferably 2000 or more, and preferably 20000 or less, more preferably 10000 or less.

The dimming layer can be produced using a resin material for forming the resin matrix and the light-modulating suspension.

The resin material is preferably a resin material cured by irradiation with energy rays. Examples of the resin material cured by irradiation with energy rays include a polymeric composition containing a photopolymerization initiator, and a polymeric compound curable by an energy ray such as ultraviolet rays, visible rays or an electron ray. Examples of the polymeric composition include a polymeric composition containing a polymerizable monomer having an ethylenically unsaturated group and a photopolymerization initiator. Examples of the polymerizable monomer having an ethylenically unsaturated group include non-crosslinkable monomers and crosslinkable monomers.

Examples of the non-crosslinkable monomers include, as a vinyl compound, styrene monomers such as styrene, α-methyl styrene, and chlorostyrene; vinyl ether compounds such as methyl vinyl ether, ethyl vinyl ether, propyl vinyl ether, 1,4-butanediol divinyl ether, cyclohexanedimethanol divinyl ether, and diethylene glycol divinyl ether; an acid vinyl ester compound such as vinyl acetate, vinyl butylate, vinyl laurate, and vinyl stearate; and a halogen-containing monomer such as vinyl chloride, and vinyl fluoride; as a (meth)acrylic compound, an alkyl (meth)acrylate compound such as methyl (meth) acrylate, ethyl (meth)acrylate, propyl (meth)acrylate, butyl (meth) acrylate, 2-ethylhexyl (meth)acrylate, lauryl (meth) acrylate, cetyl (meth)acrylate, stearyl (meth)acrylate, cyclohexyl (meth)acrylate, and isobornyl (meth)acrylate; an oxygen atom-containing (meth)acrylate compound such as 2-hydroxyethyl (meth)acrylate, glycerol (meth)acrylate, polyoxyethylene (meth)acrylate, and glycidyl (meth)acrylate; a nitrile-containing monomer such as (meth)acrylonitrile; and a halogen-containing (meth)acrylate compound such as trifluoromethyl (meth)acrylate, and pentafluoroethyl (meth)acrylate; as an α-olefin compound, an olefin compound such as diisobutylene, isobutylene, LINEALENE, ethylene, and propylene; and as a conjugated diene compound, isoprene, butadiene, and the like.

Examples of the crosslinkable monomer include, as a vinyl compound, a vinyl-based monomer such as divinylbenzene, 1,4-divinyloxybutane, and divinyl sulfone; as a (meth)acrylic compound, a polyfunctional (meth)acrylate compound such as tetramethylolmethane tetra (meth) acrylate, polytetramethylene glycol diacrylate, tetramethylolmethane tri(meth)acrylate, tetramethylolmethane di(meth)acrylate, trimethylolpropane tri(meth)acrylate, dipentaerythritol tetra (meth) acrylate, dipentaerythritol hexa (meth) acrylate, dipentaerythritol penta(meth)acrylate, glycerol tri (meth) acrylate, glycerol di(meth)acrylate, polyethylene glycol di(meth)acrylate, polypropylene glycol di(meth)acrylate, polytetramethylene glycol di(meth)acrylate, and 1,4-butanediol di (meth)acrylate; as an allyl compound, triallyl (iso)cyanurate, triallyl trimellitate, diallyl phthalate, diallyl acrylamide, and diallyl ether; as a silane compound, a silane alkoxide compound such as tetramethoxysilane, tetraethoxysilane, triethylsilane, t-butyldimethylsilane, methyltrimethoxysilane, methyltriethoxysilane, ethyltrimethoxysilane, ethyltriethoxysilane, isopropyltrimethoxysilane, isobutyltrimethoxysilane, cyclohexyl trimethoxysilane, n-hexyltrimethoxysilane, n-octyltriethoxysilane, n-decyltrimethoxysilane, phenyltrimethoxysilane, dimethyldimethoxysilane, dimethyidiethoxysilane, diisopropyldimethoxysilane, trimethoxysilyl styrene, γ-(meth) acryloxypropyltrimethoxysilane, 1,3-divinyltetramethyldisiloxane, methylphenyldimethoxysilane, and diphenyidimethoxysilane; a polymerizable double bond-containing silane alkoxide such as vinyl trimethoxysilane, vinyltriethoxysilane, dimethoxymethylvinylsilane, dimethoxyethylvinylsilane, diethoxymethylvinylsilane, diethoxyethylvinylsilane, ethylmethyldivinylsilane, methylvinyldimethoxysilane, ethylvinyldimethoxysilane, methylvinyldiethoxysilane, ethylvinyldiethoxysilane, p-styryltrimethoxysilane, 3-methacryloxypropylmethyldimethoxysilane, 3-methacryloxypropyl trimethoxysilane, 3-methacryloxypropylmethyldiethoxysilane, 3-methacryloxypropyl triethoxy silane, and 3-acryloxypropyltrimethoxysilane; a cyclic siloxane such as decamethylcyclopentasiloxane; a modified (reactive) silicone oil such as one-terminal modified silicone oil, both-terminal silicone oil, and side-chain type silicone oil; and a carboxyl group-containing monomer such as (meth)acrylic acid, maleic acid, and maleic anhydride.

Examples of the photopolymerization initiator include 2,2-dimethoxy-1,2-diphenylethane-1-one, 1-(4-(2-hydroxyethoxy)phenyl)-2-hydroxy-2-methyl-1-propane-1-one, bis(2,4,6-trimethylbenzoyl)phenylphosphine oxide, 2-hydroxy-2-methyl-1-phenylpropan-1-one, and (1-hydroxycyclohexyl) phenyl ketone.

The resin material may contain an organic solvent soluble resin, a thermoplastic resin, poly(meth) acrylic acid, and the like. Furthermore, the resin material may contain various additives, such as a coloring inhibitor, antioxidant, and adhesiveness imparting agent, and may contain a solvent.

(GHLC type)

The dimming layer preferably contains a dichroic dye and a liquid crystal material.

Examples of the liquid crystal material include the above-described nematic liquid crystal and cholesteric liquid crystal.

The dichroic dye is, for example, a dye that appears colored from a certain direction and appears colorless from a direction perpendicular to the certain direction. The dichroic dye is preferably a substance capable of intensively absorbing at least part of light in a visible light region (for example, the wavelength is 400 nm to 700 nm), and more preferably a substance capable of anisotropically absorbing at least part of light in the visible light region. Examples of the dichroic dye include azo dyes and anthraquinone dyes. The dichroic dye is preferably a dye.

<First base material and second base material>

The first base material is preferably a transparent base material. The second base material is preferably a transparent base material. The transparent base material is, for example, a base material having light-transmitting properties (light-transmitting base material). For example, light is transmitted from one side of the transparent base material to the other side through the transparent base material. For example, when a material on one side of the transparent base material is visually observed from the other side of the transparent base material through the transparent base material, the material can be visually recognized. The term transparent includes, for example, translucent. The transparent base material may be colorless and transparent, or colored and transparent.

The materials for the first base material and the second base material are not particularly limited. The material for the first base material may be the same as or different from the material for the second base material. Examples of the material for the first base material and the second base material include glass and a resin film. Examples of the glass include soda-lime glass for general construction, lead glass, borosilicate glass, glass having various compositions in other applications, and functional glass such as heat reflection glass, heat absorption glass, and tempered glass. Examples of the resin film include polyester films such as polyethylene terephthalate, polyolefin films such as polypropylene, and resin films such as acrylic resin films. Since the transparency, formability, bondability, workability, and others are excellent, the first base material and the second base material are preferably resin base materials, more preferably resin films, and still more preferably polyethylene terephthalate (PET) films.

The first base material and the second base material preferably include a base material body and a conductive film formed on a surface of the base material body so that an electric field for dimming can be applied. Examples of the conductive film include indium tin oxide (ITO), $SnO_2$, and $In_2O_3$. The conductive film is preferably a transparent conductive film.

From the viewpoint of further improving visibility of the dimmer laminate, the visible light transmittance of the first base material and the second base material is preferably 75% or more, more preferably 80% or more. The visible light transmittance of the first base material and the second base material may be 100% or less or 99% or less.

The visible light transmittance of the first base material and the second base material can be measured in accordance with ISO13837:2008 by performing spectroscopic measurement or the like.

The present invention will be specifically described below by way of Examples and Comparative Examples. The present invention is not limited only to the following Examples.

The following materials were provided.

(Material of silicone particle body):

    Silicone resin A (both-terminal acryl-modified silicone, "X-22-2445" manufactured by Shin-Etsu Chemical Co., Ltd., number of repeating structural units: 40)
    Silicone resin B (both-terminal methacryl-modified silicone, "X-22-164A" manufactured by Shin-Etsu Chemical Co., Ltd., number of repeating structural units: 20)
    Silicone resin C (both-terminal methacryl-modified silicone, "X-22-164" manufactured by Shin-Etsu Chemical Co., Ltd., number of repeating structural units: 10)
    Divinylbenzene

(Filler) :

    Carbon black particle (inorganic particle, particle diameter 20 μm)
    Titanium black particle (inorganic particle, particle diameter 80 μm)

(1) Production of silicone particle

(Example 1)

To 95 parts by weight of the silicone resin A was added 5 parts by weight of carbon black particles, the mixture was stirred to obtain a monomer liquid in which the carbon black particles were dispersed, then 7 parts by weight of a radical polymerization initiator (tert-butyl-2-ethylperoxyhexanoate, "PERBUTYL O" manufactured by NOF CORPORATION) was added, and the mixture was stirred until it became uniform to obtain a monomer mixed liquid. In a reaction kettle, 200 parts by weight of a 2.5% by weight aqueous solution prepared by dissolving polyvinyl alcohol having a molecular weight of about 2000 in pure water were placed. The obtained monomer mixed solution was put therein and stirred to adjust the particle diameter so that monomer droplets would have a predetermined particle diameter. Next, heating was carried out at 90°C for 9 hours, and a polymerization reaction of monomer droplets was carried out to obtain particles. The obtained particles were washed with hot water and acetone three times, respectively, and then classified to recover silicone particles.

(Examples 2 to 11 and Comparative Examples 1 to 4)

Silicone particles were prepared in the same manner as in Example 1 except that the materials and contents (% by weight) of the filler and the silicone particle body were changed as shown in Tables 1 to 4, and the average particle diameter of the silicone particles was set as shown in Tables 1 to 4. In Table 4, although Comparative Examples 3 and 4 containing no silicone resin do not correspond to silicone particles, Comparative Examples 3 and 4 are described in the columns of "silicone particle body" and "silicone particle" for convenience.

(2) Production of dimmer laminate

SPD-type dimmer laminate:

A dimming film in which a known SPD layer was disposed was produced except that 5% by weight of the obtained silicone particles were dispersed between two PET films on which transparent and conductive ITO was deposited. The dimming film was sandwiched between two transparent glasses to produce an SPD-type dimmer laminate.

PDLC-type dimmer laminate:

A dimming film in which a known PDLC layer was disposed was produced except that 5% by weight of the obtained silicone particles were dispersed between two PET films on which transparent and conductive ITO was deposited. The dimming film was sandwiched between two transparent glasses to produce a PDLC-type dimmer laminate.

(Evaluation)

(1) Average particle diameter

With respect to the obtained silicone particles, the particle diameters of about 100,000 particles were measured using a particle size distribution measuring apparatus ("Multisizer 4" manufactured by Beckman Coulter, Inc.), and the average particle diameter was measured.

(2) CV value of particle diameter

The CV value of the particle diameter of the obtained silicone particles was calculated by the method described above.

(3) Visible light transmittance

The visible light transmittance of the obtained silicone particles was calculated by the method described above.

(4) 10% K values at 25°C and 90°C

The 10% K values at 25°C and 90°C of the obtained silicone particles were measured by the above-described method using "Fischer Scope H-100" manufactured by FISCHER INSTRUMENTS K.K. In addition, the ratio (10% K value at 90°C/10% K value at 25°C) was determined.

(5) Compression recovery rate at 25°C

The compression recovery rate at 25°C of the obtained silicone particles was measured by the above-described method using "Fischer Scope H-100" manufactured by FISCHER INSTRUMENTS K.K.

(6) Gap controllability at 90°C

The obtained dimmer laminate was heated at 90°C for 3 hours, and the maximum value and the minimum value of a distance between the base materials (PET films) were measured. The gap controllability at 90°C was assessed according to the following criteria.

[Assessment criteria for gap controllability at 90°C]

∘∘∘: The maximum value of the distance between the base materials is less than 1.05 times the minimum value.
∘∘: The maximum value of the distance between the base materials is 1.05 times or more and less than 1.10 times the minimum value.
o: The maximum value of the distance between the base materials is 1.10 times or more and less than 1.15 times the minimum value.
×: The maximum value of the distance between the base materials is 1.15 times or more the minimum value.

(7) Variation suppression property of transmittance of dimmer laminate

In accordance with JIS S3107, the obtained dimmer laminate was irradiated with light having a wavelength of 380 nm to 780 nm, the visible light transmittance (%) (hereinafter, referred to as transmittance) was measured at a total of five points including four corners and the central portion, the maximum value and the minimum value of the transmittance were determined, and the difference was determined. The variation suppression property of the transmittance of the dimmer laminate was assessed according to the following criteria.

[Assessment criteria of variation in transmittance of dimmer laminate]

∘∘∘: The difference between the maximum value and the minimum value of the transmittance is less than 5%
∘∘: The difference between the maximum value and the minimum value of the transmittance is 5% or more and less than 10%
∘: The difference between the maximum value and the minimum value of the transmittance is 10% or more and less than 20%
×: The difference between the maximum value and the minimum value of the transmittance is 20% or more

(8) Scratch suppression property of base material

The obtained dimmer laminate was subjected to a vibration test under the following conditions. For the dimmer laminate after the vibration test, the number of scratches per 150 $mm^2$ of a surface on the silicone particle side of the base material (PET film) was counted using an optical microscope (observation magnification: 50 times). The scratch suppression property of the base material was assessed according to the following criteria.

(Conditions of vibration test)

Apparatus used: VS3000/SA3M (manufactured by IMV Corporation.)
Vibration frequency: 2000 Hz
Acceleration: 30.8 $m/s^2$
Test direction and test time: 8 hours in horizontal direction and 8 hours in vertical direction

[Assessment criteria of scratch suppression property of base material]

∘∘: The number of scratches is 0
∘: The number of scratches is 1 or more and 3 or less
×: The number of scratches is 4 or more

The composition and results of the silicone particles are shown in Tables 1 to 4 below.

[Table 1]

| | | | | Example 1 | Example 2 | Example 3 | Example 4 |
|---|---|---|---|---|---|---|---|
| Silicone particle | Silicone particle body | Silicone resin A | wt% | 95 | 95 | | |
| | | Silicone resin B | wt% | | | 95 | |
| | | Silicone resin C | wt% | | | | 95 |
| | | Divinylbenzene | wt% | | | | |
| | Filler | Carbon black particle | wt% | 5 | | 5 | 5 |
| | | Titanium black particle | wt% | | 5 | | |
| | Average particle diameter | | $\mu$m | 20 | 20 | 20 | 20 |
| | CV value of particle diameter | | % | 8 | 10 | 10 | 10 |
| | Visible light transmittance | | % | 0.01 | 1 | 0.01 | 0.01 |
| | 10% K value at 25°C | | N/mm$^2$ | 10 | 10 | 320 | 1670 |
| | 10% K value at 90°C | | N/mm$^2$ | 10 | 10 | 300 | 1600 |
| | Ratio (10% K value at 90°C/10% K value at 25°C) | | - | 1.00 | 1.00 | 0.94 | 0.96 |
| | Compression recovery rate at 25°C | | % | 85 | 75 | 82 | 72 |
| Evaluation | Gap controllability at 90°C | | - | ○○○ | ○○ | ○○ | ○○ |
| | Variation suppression property of transmittance of dimmer laminate | | - | ○○○ | ○ | ○ | ○○ |
| | Scratch suppression property of base material | | - | ○○ | ○○ | ○ | ○ |

[Table 2]

| | | | | Example 5 | Example 6 | Example 7 | Example 8 |
|---|---|---|---|---|---|---|---|
| Silicone particle | Silicone particle body | Silicone resin A | wt% | 90 | 97 | 95 | 95 |
| | | Silicone resin B | wt% | | | | |
| | | Silicone resin C | wt% | | | | |
| | | Divinylbenzene | wt% | | | | |
| | Filler | Carbon black particle | wt% | 10 | 3 | 5 | 5 |
| | | Titanium black particle | wt% | | | | |
| | Average particle diameter | | $\mu$m | 20 | 20 | 28 | 20 |
| | CV value of particle diameter | | % | 10 | 10 | 10 | 10 |
| | Visible light transmittance | | % | 0.001 | 0.1 | 0.01 | 0.01 |
| | 10% K value at 25°C | | N/mm$^2$ | 100 | 10 | 10 | 10 |
| | 10% K value at 90°C | | N/mm$^2$ | 100 | 10 | 10 | 10 |
| | Ratio (10% K value at 90°C/10% K value at 25°C) | | - | 1.00 | 1.00 | 1.00 | 1.00 |
| | Compression recovery rate at 25°C | | % | 80 | 88 | 85 | 85 |

(continued)

| | | | | Example 5 | Example 6 | Example 7 | Example 8 |
|---|---|---|---|---|---|---|---|
| Evaluation | Gap controllability at 90°C | | - | ○ | ○○ | ○○ | ○○ |
| | Variation suppression property of transmittance of dimmer laminate | | - | ○○○ | ○○ | ○○○ | ○○○ |
| | Scratch suppression property of base material | | - | ○ | ○○ | ○○ | ○○ |

[Table 3]

| | | | | Example 9 | Example 10 | Example 11 |
|---|---|---|---|---|---|---|
| Silicone particle | Silicone particle body | Silicone resin A | wt% | 99 | 85 | 99.9 |
| | | Silicone resin B | wt% | | | |
| | | Silicone resin C | wt% | | | |
| | | Divinylbenzene | wt% | | | |
| | Filler | Carbon black particle | wt% | 1 | 15 | 0.1 |
| | | Titanium black particle | wt% | | | |
| | Average particle diameter | | μm | 20 | 20 | 20 |
| | CV value of particle diameter | | % | 10 | 10 | 10 |
| | Visible light transmittance | | % | 0.5 | 0.001 | 5 |
| | 10% K value at 25°C | | N/mm$^2$ | 10 | 120 | 10 |
| | 10% K value at 90°C | | N/mm$^2$ | 10 | 110 | 10 |
| | Ratio (10% K value at 90°C/10% K value at 25°C) | | - | 1.00 | 0.92 | 1.00 |
| | Compression recovery rate at 25°C | | % | 90 | 70 | 88 |
| Evaluation | Gap controllability at 90°C | | - | ○○ | ○ | ○○ |
| | Variation suppression property of transmittance of dimmer laminate | | - | ○ | ○ | ○ |
| | Scratch suppression property of base material | | - | ○○ | ○ | ○○ |

[Table 4]

| | | | | | Comparative Example 1 | Comparative Example 2 | Comparative Example 3 | Comparative Example 4 |
|---|---|---|---|---|---|---|---|---|
| Silicone particle | Silicone particle body | | Silicone resin A | wt% | 100 | 90 | | |
| | | | Silicone resin B | wt% | | 10 | | |
| | | | Silicone resin C | wt% | | | | |
| | | | Divinylbenzene | wt% | | | 100 | 95 |
| | Filler | | Carbon black particle | wt% | | | | 5 |
| | | | Titanium black particle | wt% | | | | |
| | Average particle diameter | | | $\mu$m | 20 | 20 | 20 | 20 |
| | CV value of particle diameter | | | % | 10 | 10 | 10 | 10 |
| | Visible light transmittance | | | % | 88 | 82 | 78 | 0.01 |
| | 10% K value at 25°C | | | N/mm$^2$ | 10 | 100 | 3950 | 3800 |
| | 10% K value at 90°C | | | N/mm$^2$ | 10 | 110 | 3400 | 3150 |
| | Ratio (10% K value at 90°C/10% K value at 25°C) | | | - | 1.00 | 1.10 | 0.86 | 0.83 |
| | Compression recovery rate at 25°C | | | % | 90 | 92 | 65 | 95 |
| Evaluation | Gap controllability at 90°C | | | - | ○○ | ○○ | × | × |
| | Variation suppression property of transmittance of dimmer laminate | | | - | × | × | × | × |
| | Scratch suppression property of base material | | | - | ○ | ○ | × | × |

**EXPLANATION** OF SYMBOLS

1, 1A: Silicone particle
2: Silicone particle body
3, 3A: Filler
11: First base material
12: Second base material
13, 14, 15: Dimming layer
13A: Liquid crystal capsule
13B: Binder
14A: Droplet of light-modulating suspension
14Aa: Dispersion medium
14Ab: Light-modulating particle
14B: Resin matrix
15A: Dichroic dye
15B: Liquid crystal material
21: PDLC-type dimmer laminate
22: SPD-type dimmer laminate
23: GHLC-type dimmer laminate

**Claims**

1. A silicone particle comprising:

   a silicone particle body; and
   a plurality of fillers,
   at least one of the plurality of fillers being present inside the silicone particle body, and a ratio of a 10% K value at 90°C to the 10% K value at 25°C being 0.90 or more.

2. The silicone particle according to claim 1, wherein the 10% K value at 25°C is 2,000 N/mm$^2$ or less.

3. The silicone particle according to claim 1 or 2, wherein the 10% K value at 90°C is 1,800 N/mm$^2$ or less.

4. The silicone particle according to any one of claims 1 to 3, wherein a compression recovery rate at 25°C is 91% or less.

5. The silicone particle according to any one of claims 1 to 4, wherein a particle diameter is 30 $\mu$m or less.

6. The silicone particle according to any one of claims 1 to 5, wherein a CV value of the particle diameter is 15% or less.

7. The silicone particle according to any one of claims 1 to 6, wherein a visible light transmittance is 10% or less.

8. The silicone particle according to any one of claims 1 to 7, wherein the filler is a colorant.

9. The silicone particle according to claim 8, wherein the colorant is an inorganic particle, a pigment, or a dye.

10. The silicone particle according to claim 8 or 9, wherein the colorant is a white colorant or a black colorant.

11. The silicone particle according to any one of claims 1 to 10, wherein a content of the filler in 100% by weight of the silicone particle is 0.1% by weight or more and 30% by weight or less.

12. The silicone particle according to claim 11, wherein the content of the filler in 100% by weight of the silicone particle is 3.0% by weight or more and 10% by weight or less.

13. A dimmer laminate comprising:

    a first base material;
    a second base material; and
    a dimming layer disposed between the first base material and the second base material,
    the dimming layer containing the silicone particles according to any one of items 1 to 12.

[FIG. 1.]

[FIG. 2.]

[FIG. 3.]

[FIG. 4.]

[FIG. 5.]

## INTERNATIONAL SEARCH REPORT

| International application No. |
| --- |
| **PCT/JP2023/045619** |

| A. CLASSIFICATION OF SUBJECT MATTER |
| --- |
| *G02F 1/1339*(2006.01)i; *G02F 1/13*(2006.01)i; *G02F 1/19*(2019.01)i<br>FI:   G02F1/1339 500; G02F1/13 505; G02F1/19 |
| According to International Patent Classification (IPC) or to both national classification and IPC |

| B. FIELDS SEARCHED |
| --- |
| Minimum documentation searched (classification system followed by classification symbols)<br>   G02F1/1339; G02F1/13; G02F1/15-1/19; G09F9/00; G02B5/20-5/30; H10K50/84-50/844 |
| Documentation searched other than minimum documentation to the extent that such documents are included in the fields searched<br>   Published examined utility model applications of Japan 1922-1996<br>   Published unexamined utility model applications of Japan 1971-2024<br>   Registered utility model specifications of Japan 1996-2024<br>   Published registered utility model applications of Japan 1994-2024 |
| Electronic data base consulted during the international search (name of data base and, where practicable, search terms used) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 8-81561 A (NIPPON SHOKUBAI CO., LTD.) 26 March 1996 (1996-03-26)<br>claims 1-4, paragraphs [0118]-[0152] | 1-13 |
| A | JP 8-278506 A (NIPPON SHOKUBAI CO., LTD.) 22 October 1996 (1996-10-22)<br>claims 1-7, paragraphs [0081], [0113]-[0116] | 1-13 |

☐ Further documents are listed in the continuation of Box C.   ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **21 February 2024** | **05 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

| International application No. |
| --- |
| **PCT/JP2023/045619** |

| Patent document cited in search report | | | Publication date (day/month/year) | Patent family member(s) | Publication date (day/month/year) |
| --- | --- | --- | --- | --- | --- |
| JP | 8-81561 | A | 26 March 1996 | (Family: none) | |
| JP | 8-278506 | A | 22 October 1996 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022079565 A